Europäisches Patentamt

European Patent Office

Office européen des brevets

(11) Numéro de publication: **0 237 801**
**A1**

## (12) DEMANDE DE BREVET EUROPEEN

(21) Numéro de dépôt: 87102119.2

(22) Date de dépôt: 14.02.87

(51) Int. Cl.4: **H01S 3/03** , H01S 3/04

(30) Priorité: 17.03.86 FR 8603877

(43) Date de publication de la demande:
23.09.87 Bulletin 87/39

(84) Etats contractants désignés:
CH DE GB LI NL

(71) Demandeur: **ASULAB S.A.**
**Faubourg du Lac 6**
**CH-2501 Bienne(CH)**

(72) Inventeur: **Steffen, Jürg**
**Dorf**
**CH-3655 Sigriswil(CH)**

(74) Mandataire: **de Raemy, Jacques et al**
**ICB Ingénieurs Conseils en Brevets SA**
**Faubourg du Lac 6**
**CH-2501 Bienne(CH)**

(54) **Laser comportant au moins un joint d'étanchéité.**

(57) Le laser comporte un tube à décharge (46) fait d'une pièce et pénétrant avec jeu (41) d'un côté dans une chambre d'anode (45) et de l'autre côté dans une chambre de cathode, lesdites chambres d'anode et de cathode ayant un coefficient de dilatation thermique différent du coefficient de dilatation dudit tube.

Des soufflets (40) sont soudés hermétiquement par leurs premières extrémités (42) auxdites chambres d'anode et de cathode et scellés par leurs secondes extrémités (43) audit tube à décharge au moyen d'un cordon de verre (44).

L'invention s'applique à tous lasers dans lesquels il s'agit d'assembler de manière étanche deux éléments présentant des coefficients de dilatation thermique différents.

Fig. 2

EP 0 237 801 A1

## LASER COMPORTANT AU MOINS UN JOINT D'ETANCHEITE

L'invention est relative à un laser comportant au moins un joint pour assembler de manière étanche au moins un premier élément et un second élément faisant partie dudit laser, lesdits éléments présentant des coefficients de dilatation thermique différents et étant susceptibles de se déplacer l'un par rapport à l'autre consécutivement à des variations de température de fonctionnement.

On sait que tout dispositif laser ayant à fournir une certaine puissance est soumis à un échauffement important. Ces dispositifs comprennent généralement un tube à décharge s'il s'agit d'un laser à gaz ou un barreau s'il s'agit d'un laser à milieu solide. Le tube ou le barreau est en principe supporté par deux flasques maintenus à distance constante dans le but d'assurer au laser une bonne stabilité. Cependant en s'échauffant le tube ou le barreau se déplace dans lesdits flasques et des dispositions doivent être prises pour que ce mouvement relatif puisse avoir lieu librement tout en assurant une étanchéité parfaite des éléments se déplaçant l'un par rapport à l'autre.

Une construction permettant le déplacement dont on vient de parler est décrite dans le document FR-A-2 086 023 (US-A-3 705 999). Il s'agit ici d'un laser à gaz équipé d'un tube à décharge pouvant coulisser librement dans un flasque solidaire d'une bride annulaire. Un soufflet destiné à compenser les variations de longueur dues aux variations de température du tube est disposé entre la bride annulaire et une autre bride elle-même solidaire du tube. Le soufflet est brasé par chacune de ses extrémités aux brides qu'il relie assurant ainsi une parfaite étanchéité vers l'extérieur au gaz contenu dans le tube. S'agissant ici de brides présentant un même coefficient de dilatation thermique, il n'y a pas de difficulté à choisir un soufflet présentant aussi ce même coefficient et brasé de part et d'autre aux brides en question.

Le laser à gaz décrit dans le brevet US-A-3 611 183 comporte un tube à quartz scellé dans lequel sont disposées une anode centrale et deux cathodes d'extrémités. Dans une variante d'exécution, le tube est fait en deux parties reliées par un soufflet. Les extrémités du soufflet sont fixées chacune au tube correspondent par scellement selon une technique connue. Ici les éléments qu'il s'agit d'assembler, c'est-à-dire les deux demi-tubes, présentent des coefficients de dilatation thermique qui sont semblables, ce qui conduit à un genre de soudure qui est le même pour chaque extrémité du soufflet. Le but que cherche à atteindre le soufflet du document cité est un alignement précis des deux demi-tubes l'un à la suite de l'autre de façon à obtenir un parfait alignement du chemin optique axial. Le but de la présente invention est totalement différent puisque le soufflet proposé assemble de manière étanche deux éléments présentant des coefficients de dilatation thermique différents pour permettre auxdits éléments de se déplacer l'un par rapport à l'autre à la suite des écarts de température qu'ils peuvent présenter.

Le laser à gaz du document JP-A-60 28281 montre que les miroirs d'extrémités sont fixés au tube à décharge au moyen de soufflets selon une technique connue en soi pour maintenir constante la distance entre les miroirs quand la température varie. On ne sait cependant rien sur la façon de sceller ces soufflets aux pièces qu'ils relient.

Le document CH-A-474 880 décrit un dispositif de pompage de laser à cristal. Dans ce document le cristal est supporté par des flasques. Le cristal est monté étanche sur les flasques au moyen de joints toriques.

On connaît également certains lasers à gaz $CO_2$ dont le tube à décharge, fait en céramique, est supporté avec jeu par des chambres d'anode et de cathode, le joint étant réalisé au moyen de O-rings faits en polymères.

Les deux derniers exemples cités ci-dessus montrent qu'on a l'habitude d'utiliser des joints toriques, généralement en matière plastique, quand les éléments en présence ne présentent pas le même coefficient de dilatation thermique, comme c'est le cas quand il s'agit d'assembler un élément métallique et un élément non métallique. Pourtant l'expérience montre que ces joints manquent de fiabilité. En effet, comme ils sont soumis à de sévères contraintes en usage normal : variations importantes de température, bombardement dû au plasma, ils vieillissent rapidement et doivent être remplacés à maintes reprises. Ils nécessitent alors de fréquentes interventions de maintenance, ce qui occasionne des pertes de temps et des coûts importants. Il faut mentionner également que de tels joints ne sont pas absolument étanches et que pour un laser à gaz les utilisant, il sera nécessaire périodiquement de rétablir à l'intérieur de la cavité la pression convenable au bon fonctionnement du dispositif.

Ainsi, pour remédier à ces inconvénients, le laser objet de la présente invention propose un joint qui se présente sous la forme d'un soufflet soudé hermétiquement par sa première extrémité à l'un des éléments en présence et scellé par sa seconde extrémité à l'autre des éléments en présence au moyen d'un cordon de verre.

Plusieurs modes d'exécution de l'invention vont être décrits maintenant et illustrés par le dessin dans lequel :

-la figure la est une coupe longitudinale montrant un laser à gaz selon un premier mode d'exécution de l'invention, ledit laser étant pourvu de conduits de recirculation du gaz scellés hermétiquement à l'endroit de leur pénétration dans des chambres d'anode et de cathode;

-la figure 1b est un détail agrandi d'une portion de la coupe montrée en figure 1a;

-la figure 1c est une variante du mode d'exécution présenté en figure 1b;

-la figure 2 est une coupe représentant un deuxième mode d'exécution de l'invention appliqué à un laser à gaz dont le tube à décharge est scellé hermétiquement aux chambres d'anode et de cathode;

-la figure 3 est une coupe présentant un troisième mode d'exécution de l'invention appliqué à un laser à gaz du type replié dont un miroir au moins est scellé de façon hermétique au corps même du laser; et

-la figure 4 est une coupe représentant un quatrième mode d'exécution de l'invention appliqué à un laser à milieu solide où le cristal est scellé hermétiquement aux flasques dont est pourvu ledit laser.

La figure la montre un laser à gaz muni d'un tube à décharge 6 fait d'une multiplicité de corps métalliques 7 alignés bout à bout, d'une chambre d'anode 8 enfermant une anode 9 et d'une chambre de cathode 5 enfermant une cathode 4. Chaque corps métallique 7 est pourvu d'une ouverture centrale 27 pour former, quand lesdits corps métalliques sont assemblés, la chambre d'ionisation 28. Le laser comporte encore un support de cathode 3 et un support d'anode 10 fixés chacun à un flasque de fermeture 1. Un tube intérieur annulaire 35 entoure entièrement le tube à décharge 6 et délimite un espace 23 où circule un fluide de refroidissement. Une bobine 2 crée un champ magnétique pour le confinement du rayon laser et est recouverte par un tube de fermeture 36. Les supports 3, 10 de cathode et d'anode portent en outre chacun un canon respectivement référencé 11 et 12 à l'extrémité duquel se trouve une fenêtre de Brewster 13 et 14. L'enceinte ainsi définie est remplie d'un gaz, par exemple de l'argon à basse pression (0,1 à 10 mbar). Des passages respectivement référencés 17 et 18 portent des électrodes 19 et 20 qui servent respectivement de support et de connexion de la cathode 4 et de l'anode 9.

La figure la montre enfin que le laser est équipé de conduits de recirculation du gaz dont un seul, référencé 26, apparaît à la figure. Ces conduits ont pour but d'éviter la formation d'un gradient de pression qui serait suffisant pour annuler la décharge, gradient provoqué par la migration des ions positifs et des atomes neutres vers l'anode.

Selon l'invention, le conduit 26 est scellé hermétiquement aux chambres d'anode et de cathode 5, 8 au moyen de soufflets 30. Dans le cas particulier, les chambres d'anode et de cathode 5, 8 forment chacune un premier élément et le conduit 26 un second élément et font partie intégrante de la construction du laser. Ces premier et second éléments présentent des coefficients de dilatation thermique différents étant réalisés en l'occurrence en alliage d'aluminium et en céramique respectivement.

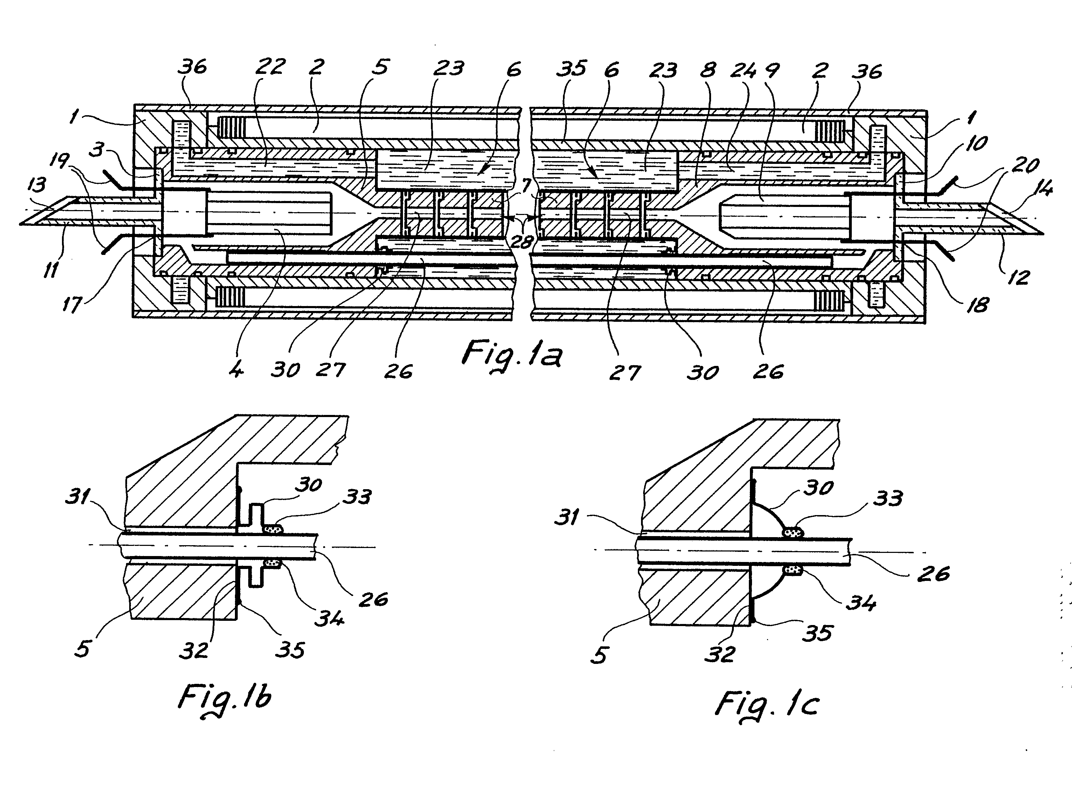

Ainsi que le montre la figure 1b, qui est un agrandissement partiel du côté gauche de la figure 1a, les premier et second éléments 5, 26 sont susceptibles de se déplacer l'un par rapport à l'autre puisqu'on a ménagé un jeu 31 entre la chambre 5 et le conduit 26. En s'échauffant ou en se refroidissant, les éléments en présence pourront donc coulisser l'un dans l'autre au gré de leur allongement respectif. Le même jeu permettra aussi au conduit 26 et à l'orifice percé dans la chambre 5 d'augmenter ou de diminuer de diamètre sans qu'il y ait coincement des pièces l'une dans l'autre.

Dans le cas où le tube à décharge 6 est en aluminium, on peut calculer que son allongement est de 2,38 mm pour un mètre de tube et une élévation de température de 100°C. Le conduit en céramique 26, pour la même longueur et la même élévation de température, s'allonge de 0,5 mm. Le déplacement du tube par rapport à une des chambres est donc de (2,38 -0,5) : 2 -0,9 mm.

On notera ici que les éléments en présence ne s'échauffent pas nécessairement de la même façon. En effet, à l'enclenchement du laser on observe un fort gradient de température dû au fait que les pièces centrales s'échauffent plus rapidement que les pièces périphériques, phénomène accentuant encore le déplacement relatif desdites pièces.

Comme le montre la figure 1b, le soufflet 30 est soudé hermétiquement par sa première extrémité 32 à la chambre 5 et est scellé par sa seconde extrémité 33 au conduit 26 au moyen d'un cordon de verre 34. La soudure 35 du soufflet 30 à la chambre 5 réalisée ici en alliage d'aluminium est de préférence une brasure réalisée au moyen d'un produit à base de cadmium, par exemple la brasure portant le No 1827 de la société Castolin. Ce pourrait être aussi une soudure continue réalisée au moyen d'un rayon laser. Pour ce qui est du cordon 34, on connaît de nombreux verres utilisés comme agent de soudure qu'on appele quelquefois "glass-frit" et qui se présentent sous la forme d'une pâte contenant de la poudre de verre et un liant. Par exemple, on peut citer les produits mis sur le marché par la société américaine Corning et qui se distinguent par une basse température de fusion (de l'ordre de 500°C).

Le soufflet 30 est réalisé quant à lui en un matériau ayant substantiellement les mêmes propriétés de dilatation thermique que celle du verre qui est employé pour la soudure. On peut utiliser des alliages au nickel contenant approximativement 29 % de nickel, 17 % de cobalt, le reste étant du fer. Ces alliages présentent un coefficient de dilatation thermique semblable à celui du verre non seule ment pour une température déterminée mais pour une gamme de température s'étendant généralement jusqu'à la température de ramollissement du verre. Un tel matériel est produit par exemple par la société Stupakoff Ceramic et est connu sous la marque déposée Kovar.

Il est important également, pour la bonne tenue du cordon de verre, que l'élément auquel est scellé le soufflet ait également un coefficient de dilatation thermique aussi semblable que possible à celui du verre utilisé pour la soudure. En résumé, on cherchera à obtenir des matériaux (ici conduit 26, cordon 34 et soufflet 30) présentant sensiblement le même coefficient de dilatation thermique, le second élément constitutif de la construction (ici le conduit) imposant le cordon de verre et le soufflet à choisir. Cela ne présente en général pas de problème tant les variétés de Kovar et de glass-frit sont nombreuses. Ainsi, si l'on se réfère à nouveau à la figure 1a, les soufflets 30 assurent une étanchéité parfaite au passage du conduit 26 dans les chambres d'anode et de cathode, d'une part, au gaz contenu dans l'enceinte 28 et, d'autre part, au liquide réfrigérant contenu dans l'espace 23.

On peut donner au soufflet 30 toutes sortes de formes et l'invention n'est pas limitée à celle qui est représentée à la figure 1b. La forme choisie sera celle la mieux adaptée à la construction et aux dilatations des matériaux en présence. Une variante est montrée en figure 1c où le soufflet 30 est une simple rondelle en forme d'assiette.

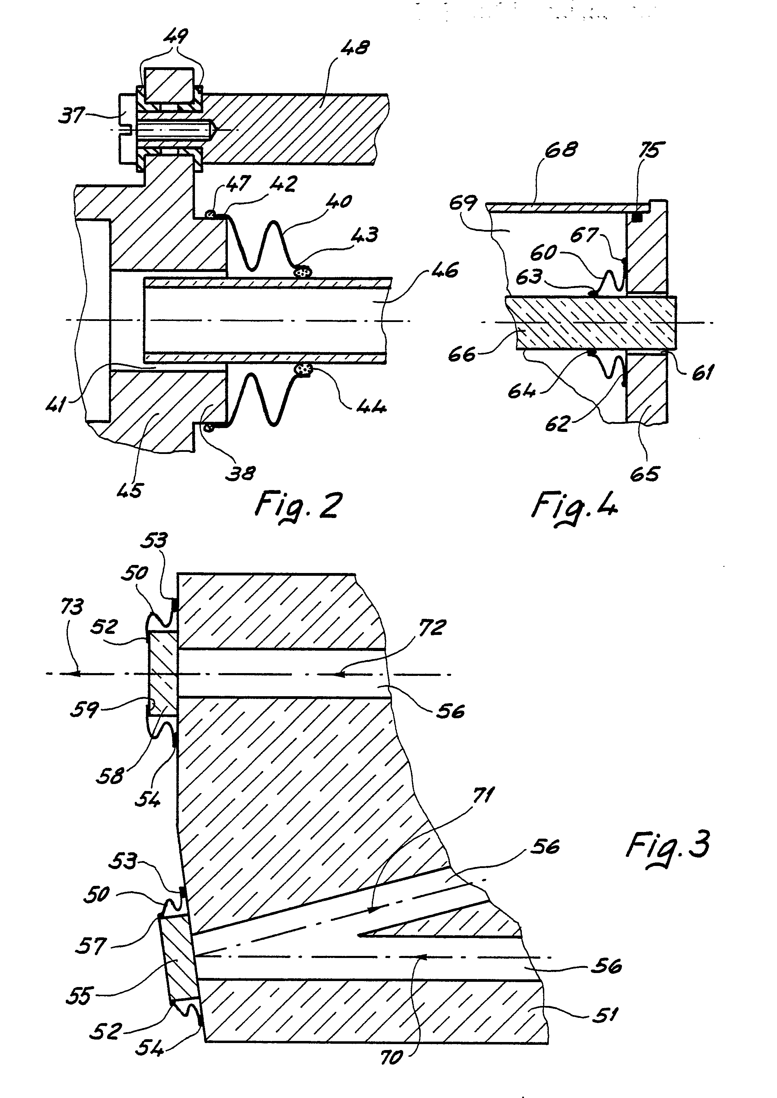

La figure 2 est une coupe partielle montrant un deuxième mode d'exécution de l'invention appliqué à un laser à gaz utilisant du $CO_2$. On a représenté ici une chambre d'anode 45 formant un premier élément du laser et réalisée par exemple en alliage d'aluminium ou en alliage de nickel. A ce premier élément est assemblé de manière étanche un tube à décharge 46 réalisé d'une pièce et fait par exemple en céramique. Selon l'invention, l'assemblage étanche utilise un soufflet 40 qui est soudé par sa première extrémité 42 à un bossage 38 porté par la chambre 45 et qui est scellé par sa seconde extrémité 43 au tube 46 au moyen d'un cordon de verre 44. La soudure du soufflet sur le bossage 38 est référencée 47. Cette soudure pourra être une brasure au cadmium comme cela a été mentionné à propos du mode d'exécution précédent. De même, on s'arrangera pour que le soufflet 40, le cordon de verre 44 et le tube 46 soient réalisés en des matières ayant sensiblement le même coefficient de dilatation thermique.

Par souci de simplication, la figure 2 ne montre que la partie gauche du laser à gaz avec sa chambre d'anode. La partie droite avec sa chambre de cathode est semblable par raison de symétrie et n'a pas été représentée. Les chambres d'anode et de cathode sont maintenues de préférence à distance fixe par des moyens situés en dehors du tube à décharge. Comme le montre la figure 2, ces moyens comprennent des barres dont une seule 48 est représentée au dessin. Ces barres seront réalisées en une matière présentant une expansion négligeable si l'on désire offrir un laser à haute stabilité. On comprend en effet que dans ces conditions la distance entre les miroirs, lesquels font généralement partie des chambres d'anode et de cathode, restera invariable quel que soit l'échauffement du dispositif laser. La matière de ces barres peut être de l'Invar (marque déposée) dont le coefficient de dilatation thermique est de l'ordre de $1,5 \bullet 10^{-5}$ par degré centigrade. Ces barres 48 doivent être isolées des chambres d'anode et de cathode qui se trouvent être portées à des potentiels électriques différents. Cette isolation est représentée ici par des rondelles à canon isolantes 49. Une vis 37 assujettit la barre 48 à la chambre 45.

Ce type de laser est généralement refroidi par un liquide de réfrigération entourant le tube à décharge 46. A ce moment, on dispose entre le tube 46 et les barres 48 un autre tube non représenté et réalisé par exemple en céramique. Ce tube est fixé à chacune de ses extrémités aux chambres d'anode et de cathode de la même façon que le tube à décharge 46, c'est-à-dire au moyen de soufflets.

Les barres 48 pourraient être remplacées par un tube en quartz entourant entièrement le dispositif. Dans ce cas, on améliorerait la stabilité du laser d'un facteur 3 puisque le coefficient de dilatation du quartz est de l'ordre de $0,5 \bullet 10^{-5}$.

La figure 2 montre aussi que le tube 46 pénètre avec un jeu 41 dans la chambre 45, ce qui permet audit tube de coulisser librement dans ladite chambre quand la température change. Pour prendre un exemple, on indiquera qu'avec un tube 46 fait en céramique (coeffi cient $5 \bullet 10^{-6}$), des barres 48 faites en Invar, une longueur de tube d'un mètre et une élévation de température de 100°C, le déplacement du tube 46 par rapport à la chambre 45 est d'environ 0,2 mm.

La figure 3 est une coupe partielle montrant schématiquement un troisième mode d'exécution de l'invention appliqué à un laser à gaz dont le tube à décharge est plié et qui est agencé plus particulièrement pour produire un rayon dans l'infrarouge éloigné. On n'a représenté ici que la partie gauche de ce laser. Il est constitué principalement d'un bloc massif en céramique ($Al_2O_3$) 51 dans lequel le tube à décharge 56 est percé en zig-zag. En provenance d'un miroir à grille non représenté, le rayon 70 est réfléchi une première fois par un miroir métallique 55 réalisé par exemple en cuivre ou en molybdène. Le rayon réfléchi 71 frappe à nouveau un miroir métallique identique à celui référencé 55(non représenté) et se propage dans letube à décharge selon le chemin 72 pour sortir de la cavité en 73 par un miroir de sortie 58. Le miroir de sortie est généralement un cristal constitué de séléniure de zinc (ZnSe).

Dans la construction qui vient d'être décrite, on est à nouveau en présence de deux éléments qui doivent être assemblés de manière étanche et qui présentent des coefficients de dilatation thermique différents. Il s'agit, d'une part, des miroirs métalliques 55 apposés contre le bloc de céramique 51 et, d'autre part, du miroir de sortie en cristal 58 apposé contre le même bloc. Comme il n'est pas question de souder directement ces miroirs sur le bloc, car de telles soudures ne résisteraient pas aux variations de température qui se présentent, on utilise à nouveau les moyens d'assemblage de la présente invention.

A cet effet, les miroirs métalliques 55 et le miroir cristallin 58 sont fixés hermétiquement au bloc en céramique 51 au moyen de soufflets 50 qui, par leurs premières extrémités 52 sont attachés par des soudures respectivement référencées 57 et 59 auxdits miroirs et par leurs secondes extrémités 53 sont scellés audit bloc 51 par un cordon de verre 54. Le bloc 51, le cordon 54 et les soufflets 50 sont réalisés en des matériaux présentant sensiblement le même coefficient de dilatation thermique. Les mêmes produits déjà cités et mis sur le marché par les sociétés Corning et Stupakoff par exemple pourront être utilisés pour le cordon de verre 54 et le soufflet 50 respectivement.

En ce qui concerne la soudure 57 de la première extrémité 52 du soufflet 50 sur le miroir métallique 55, on utilisera une brasure au cadmium comme cela a déjà été cité plus haut. Par contre, la soudure 59 de la première extrémité 52 du soufflet 50 sur le miroir cristallin 58 est d'une autre nature puisqu'il s'agit de souder un cristal sur un soufflet métallique fabriqué en Kovar (marque déposée). On commencera par déposer sur les bords du miroir 58 une couche mince et soudable qui pourrait être le produit Gelot (marque déposée) de la société Balzers. On soudera enfin l'extrémité 52 du soufflet 50 sur cette couche mince au moyen d'une brasure à basse température.

Cette dernière manière de faire montre que l'invention n'est pas limitée à l'assemblage hermétique d'un élément métallique sur un élément non métallique, mais qu'elle convient plus généralement à l'assemblage de deux éléments présentant des coefficients de dilatation thermique différents, en l'occurrence ici à l'assemblage de deux éléments non métalliques constitués par la céramique du bloc 51 et le cristal du miroir 58. La figure 4 montre de surcroît que le soufflet 50 est appliqué par sa première extrémité 52 sur la face extérieure du miroir 58 et non par sur sa tranche comme c'est le cas pour le miroir 55. Cette façon de faire évite une trop forte tension mécanique sur la soudure 59 ou plutôt sur le film mince qui sert de support à cette soudure, car il est nécessaire, pour assurer une application permanente du miroir 58 sur le bloc 51, d'utiliser l'élasticité du soufflet pour contraindre le miroir à s'appuyer sur le bloc. Cette élasticité est aussi mise à profit pour le miroir métallique 55. Dans ce cas cependant, la brasure 57 est plus résistante et il n'est donc plus nécessaire de la prévoir sur la face postérieure du miroir.

La figure 4 est une coupe partielle montrant un quatrième mode d'exécution de l'invention appliqué à un laser à milieu solide. Ce milieu, selon l'exemple illustré, est un barreau 66 qui peut être un grenat d'yttrium-aluminium (YAG) dopé d'ions de néodyme. Comme cela est connu, mais non représenté, on dispose dans l'axe du barreau 66 deux miroirs d'axes communs, placés en regard l'un de l'autre dont l'un, légèrement transparent, livre passage au faisceau de sortie. Une cavité 69, limitée vers l'extérieur par un manteau 68, entoure le barreau 66 ainsi qu'une lampe à décharge non représentée. La cavité 69 contient un liquide de refroidissement. Le manteau est assujetti d'une manière idoine à deux flasques dont seul celui de droite 65 est représenté. Un joint d'étanchéité 75 ferme hermétiquement la cavité 69 sur le flasque 65. La figure montre que le barreau 66 traverse avec un jeu 61 le flasque 65. Il en va de même pour l'autre extrémité du barreau pour des raisons de symétrie.

Selon l'invention et comme cela apparaît au dessin, le flasque 65 formant un premier élément du laser est assemblé de manière étanche au barreau 66 formant un second élément dudit laser au moyen d'un soufflet 60 qui est soudé hermétiquement par sa première extrémité 62 au flasque 65 et est scellé par sa seconde extrémité 63 audit barreau 66 au moyen d'un cordon de verre 64. Grâce à cet assemblage, le fluide réfrigérant contenu dans la cavité 69 ne peut pas sortir de ladite cavité. Par contre, le barreau et le flasque peuvent librement coulisser l'un dans l'autre consécutivement à des variations de température de fonctionnement. Comme cela a déjà été noté à propos des modes d'exécution des figures 1a, 1b, 1c et 2, la soudure de la première extrémité 62 du soufflet 60 peut être réalisée par une brasure 67 au flasque 65 fait en alliage d'aluminium par exemple. On s'arrange aussi pour que le cordon de verre 64 et le soufflet 60 soient faits en des matériaux présentant approximativement le même coefficient de dilatation thermique que celui du barreau 66, ce qui garantit une tenue parfaite du scellement dans toutes les situations thermique qui peuvent se présenter.

On réalise aujourd'hui des lasers solides dont le milieu d'amplification est parallélépipédique au lieu d'être allongé et circulaire. Pour cette application aussi, le joint qui est l'objet de la présente invention convient parfaitement si, au lieu de lui donner une forme annulaire, on lui fait épouser la section dudit milieu. Ainsi, ce joint pourra être de forme carrée ou rectangulaire.

La présente invention n'est pas limitée aux quatres modes d'exécution qui viennent d'être décrits. Elle concerne généralement tous joints destinés à l'assemblage de deux éléments présentant des coefficients de dilatation thermique différents, ces éléments étant des parties constitutives d'un dispositf laser. Comme premier élé ment, on a mentionné l'alliage d'aluminium, mais ce pourrait être un autre métal ou encore un élément non métallique comme un cristal (voir troisième mode d'exécution). Le second élément pourrait être du verre, du quartz, de la céramique ou du saphir pourvu que ce second élément puisse être scellé à un soufflet au moyen d'un cordon de verre.

## Revendications

1. Laser comportant au moins un joint pour assembler de manière étanche au moins un premier élément et un second élément faisant partie dudit laser, lesdits éléments présentant des coefficients de dilatation thermique différents et étant susceptibles de se déplacer l'un par rapport à l'autre consécutivement à des variations de température de fonctionnement, caractérisé par le fait que ledit joint se présente sous la forme d'un soufflet (30, 40, 50, 60) soudé hermétiquement par sa première extrémité audit premier élément et scellé par sa seconde extrémité audit second élément au moyen d'un cordon de verre (34, 44, 54, 64).

2. Laser selon la revendication 1, caractérisé par le fait que ladite première extrémité dudit soufflet est soudée par brasage audit premier élément.

3. Laser selon la revendication 1, caractérisé par le fait qu'il est du type à gaz et qu'il comporte un miroir (58) formant ledit premier élément et une base (51) servant de support audit miroir, ladite base formant ledit second élément, un soufflet (50) étant soudé hermétiquement par sa première extrémité (52) audit miroir et scellé par sa seconde extrémité (53) à ladite base au moyen d'un cordon de verre (54).

4. Laser selon la revendicaton 1, caractérisé par le fait que ledit premier élément est un élément métallique et que ledit second élément est un élément non métallique.

5. Laser selon la revendication 4, caractérisé par le fait qu'il est du type à gaz et qu'il comprend un tube à décharge (6) fait d'une multiplicité de corps métalliques (7) alignés bout à bout, une chambre d'anode (8) et une chambre de cathode - (5) formant chacune un premier élément et au moins un conduit de recirculation du gaz (26) situé en dehors du tube à décharge et pénétrant avec jeu (31) dans lesdites chambres d'anode et de cathode, ledit conduit formant ledit second élément, des premier et second soufflets (30) étant soudés hermétiquement par leurs premières extrémités (32) aux chambres d'anode et de cathode respectivement, et scellés par leurs secondes extrémités (33) audit conduit au moyen d'un cordon de verre (34).

6. Laser selon la revendication 4, caractérisé par le fait qu'il est du type à gaz et qu'il comprend un tube à décharge (46) fait d'une pièce et pénétrant avec jeu (41) d'un côté dans une chambre d'anode (45) et de l'autre côté dans une chambre de cathode, lesdites chambres étant maintenues à distance fixe par des moyens de fixation - (37, 48) situés en dehors du tube à décharge, la chambre d'anode et la chambre de cathode formant chacune un premier élément et le tube à décharge formant ledit second élément, des premier et second soufflets (40) étant soudés hermétiquement par leurs premières extrémités - (42) auxdites chambres d'anode et de cathode respectivement, et scellés par leurs secondes extrémités (43) audit tube à décharge au moyen d'un cordon de verre (44).

7. Laser selon la revendication 4, caractérisé par le fait qu'il est du type à gaz et qu'il comporte un miroir (55) formant ledit premier élément et une base (51) servant de support audit miroir, ladite base formant ledit second élément, un soufflet (50) étant soudé hermétiquement par sa première extrémité (52) audit miroir et scellé par sa second extrémité (53) à ladite base au moyen d'un cordon de verre (54).

8. Laser selon la revendication 4, caractérisé par le fait qu'il est du type à milieu solide et qu'il comporte un barreau (66) supporté avec jeu (61) entre deux flasques (65) qu'il traverse, lesdits flasques formant chacun un premier élément et ledit barreau formant ledit second élément, des premier et second soufflets (60) étant soudés hermétiquement par leurs premiéres extrémités - (62) auxdits flasques et scellés par leurs secondes extrémités (63) audit barreau au moyen d'un cordon de verre (64).

Fig.1a

Fig.1b

Fig.1c

Fig. 2

Fig. 4

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 086 023 (INSTITUT FÜR ANGEWANDTE PHYSIK DER UNIVERSITÄT BERN)<br>* Page 5, dernier paragraphe; figure 2 *<br>--- | 1,2 | H 01 J 3/03<br>H 01 J 3/04 |
| D,Y | US-A-3 611 183 (J.R. FENDLEY, Jr.)<br>* Colonne 2, ligne 64 - colonne 3, ligne 4; figure 3 *<br>--- | 1,2 | |
| D,Y | PATENT ABSTRACTS OF JAPAN, vol. 9, no. 147 (E-323)[1870], 21 juin 1985; & JP-A-60 28 281 (NIPPON DENKI K.K.) 13-02-1985<br>* En entier * | 1 | |
| | ----- | | **DOMAINES TECHNIQUES RECHERCHES (Int. Cl.4)**<br><br>H 01 J |

Le présent rapport de recherche a été établi pour toutes les revendications

| Lieu de la recherche<br>LA HAYE | Date d'achèvement de la recherche<br>30-03-1987 | Examinateur<br>MALIC K. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82